# EUROPÄISCHE PATENTSCHRIFT

(11) **EP 1 986 263 B1**
(45) Veröffentlichungstag und Bekanntmachung des Hinweises auf die Patenterteilung: **02.06.2010**
(21) Anmeldenummer: 08153390.3
(22) Anmeldetag: 27.03.2008
(51) Int. Cl.: H01M 8/04, H01M 8/06

(54) **Brennstoffzellensystem und zugehöriges Startverfahren**
Fuel cell system and appropriate starting method
Système de cellules combustibles et procédé de démarrage correspondant

(30) Priorität: 23.04.2007 DE 102007019359
(43) Veröffentlichungstag der Anmeldung: 29.10.2008
(73) Patentinhaber: J. Eberspächer GmbH & Co. KG, 73730 Esslingen (DE)
(72) Erfinder: Kaupert, Andreas, 73730, Esslingen (DE)
(74) Vertreter: BRP Renaud & Partner

(56) Entgegenhaltungen:
- EP-A- 1 571 725
- WO-A-03/021696
- WO-A-2007/137068
- DE-A1-102005 030 474

## Beschreibung

Die vorliegende Erfindung betrifft ein Brennstoffzellensystem, insbesondere in einem Kraftfahrzeug, sowie ein Verfahren zu Starten eines derartigen Brennstoffzellensystems.

Ein Brennstoffzellensystem umfasst üblicherweise zumindest eine Brennstoffzelle zum Generieren von elektrischem Strom aus einem Wasserstoffgas enthaltenden Anodengas und einem Sauerstoffgas enthaltenden Kathodengas. Zur Bereitstellung des Anodengases kann das Brennstoffzellensystem mit wenigstens einem Reformer ausgestattet sein, der aus einem Wasserstoff enthaltenden Kraftstoff und einem Sauerstoff enthaltenden Oxidator ein Wasserstoffgas enthaltendes Brenngas generiert, das als Anodengas der Brennstoffzelle zuführbar ist. Sowohl der Brennstoffzellenprozess zum Generieren des Stroms als auch der Reformerprozess zum Generieren des Brenngases benötigen eine vorbestimmte Betriebstemperatur in der Brennstoffzelle bzw. im Reformer, um hinreichend stabil bzw. um mit dem erwünschten Wirkungsgrad ablaufen zu können. Beim Starten des Brennstoffzellensystems können die Brennstoffzelle und der Reformer Umgebungstemperatur aufweisen, die deutlich niedriger ist als die genannten Betriebstemperaturen. Im Bedarfsfall soll das Brennstoffzellensystem relativ rasch zur Stromerzeugung zur Verfügung stehen, wobei das Starten, insbesondere ein Kaltstarten aus der Umgebungstemperatur, mit möglichst niedrigen Werten für Schadstoffemissionen und Kraftstoffverbrauch realisiert werden soll.

Die vorliegende Erfindung beschäftigt sich mit dem Problem, für ein Brennstoffzellensystem bzw. für ein zugehöriges Startverfahren eine verbesserte Ausführungsform anzugeben, die es insbesondere ermöglicht, das Brennstoffzellensystem in einer vergleichsweise kurzen Zeit bei relativ niedrigen Werten für Schadstoffemissionen und Kraftstoffverbrauch zu starten. Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Reformer bis zum Erreichen einer Reformerstarttemperatur als Brenner zu betreiben, der den Kraftstoff mit dem Oxidator umsetzt. Durch diesen Brennerbetriebszustand des Reformers entsteht im Reformer deutlich mehr Wärme als in seinem normalen Reformerbetriebszustand zum Generieren des Brenngases. Dementsprechend erreicht der Reformer durch den Brennerbetriebszustand vergleichsweise schnell seine Reformerstarttemperatur. Der Startvorgang des Brennstoffzellensystems kann somit verkürzt werden. Der Brennerbetriebszustand und der Reformerbetriebszustand unterscheiden sich insbesondere durch die Luftzahl, also durch das Sauerstoff-Verhältnis λ. Im Brennerbetriebszustand herrscht Sauerstoffüberschuss, also λ > 1, während im Reformerbetriebszustand ein Sauerstoffmangel vorliegt, also λ < 1. Der Reformer kann auch unterhalb der Reformerstarttemperatur als Reformer betrieben werden, jedoch instabil und mit deutlich schlechterem Wirkungsgrad.

Das Brennstoffzellensystem kann bei einer vorteilhaften Ausführungsform einen Restgasbrenner zum Verbrennen von im Betrieb der Brennstoffzelle anfallendem Wasserstoffgas enthaltenden Anodenabgas mit Sauerstoffgas enthaltendem Kathodenabgas aufweisen. Dieser Restgasbrenner kann innerhalb der Startprozedur bei deaktivierter Brennstoffzelle zum Verbrennen des durch die Brennstoffzelle durchgeleiteten Anodengases mit dem durch die Brennstoffzelle durchgeleiteten Kathodengas betrieben werden. Sobald der Reformer durch seinen Brennerbetriebszustand seine Reformerstarttemperatur erreicht, wird er in seinen Reformerbetriebszustand umgeschaltet, so dass er als Reformat Brenngas generiert. Solange die Brennstoffzelle deaktiviert ist, wird dieses Brenngas, also das Anodengas in der Brennstoffzelle nicht umgesetzt, so dass im Restgasbrenner durch die dort erfolgende Verbrennungsreaktion sehr viel Wärme generiert werden kann, die zur Aufheizung des Reformers und/oder der Brennstoffzelle nutzbar ist.

Gemäß einer besonders vorteilhaften Ausführungsform kann der dem Reformer zugeführte Oxidator durch vom Restgasbrenner abgeführtes Brennerabgas vorgewärmt werden. Zusätzlich oder alternativ kann das der Brennstoffzelle zugeführte Kathodengas durch vom Restgasbrenner abgeführtes Brennerabgas vorgewärmt werden, insbesondere nachdem das Brennerabgas den dem Reformer zugeführten Oxidator vorgewärmt hat. Durch diese Vorgehensweise bzw. durch eine entsprechende Bauweise kann die im Restgasbrenner erzeugte Wärme vorteilhaft zur raschen Aufheizung des Reformers und/oder der Brennstoffzelle genutzt werden. Dies ist insbesondere für den im Reformerbetriebszustand befindlichen Reformer von Vorteil, wenn er seine optimale Betriebstemperatur noch nicht erreicht hat. Denn die Zuführung eines kalten Oxidators kann in diesem Übergangszustand des Reformers den darin ablaufenden Gemischbildungsprozess und/oder den darin ablaufenden partiellen Oxidationsvorgang vergleichsweise stark beeinträchtigen. Beispielsweise kann ein mit einer sogenannten "kalten Flamme" arbeitender Gemischbildungsprozess durch die Zuführung eines kalten Oxidators stark beeinträchtigt werden. Durch die Aufheizung des Oxidators mit Hilfe der vergleichsweise hohen Abwärme des Restgasbrenners können die Prozesse im Reformer deutlich stabilisiert werden, wodurch er sich schneller auf seine Betriebstemperatur aufheizen lässt.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

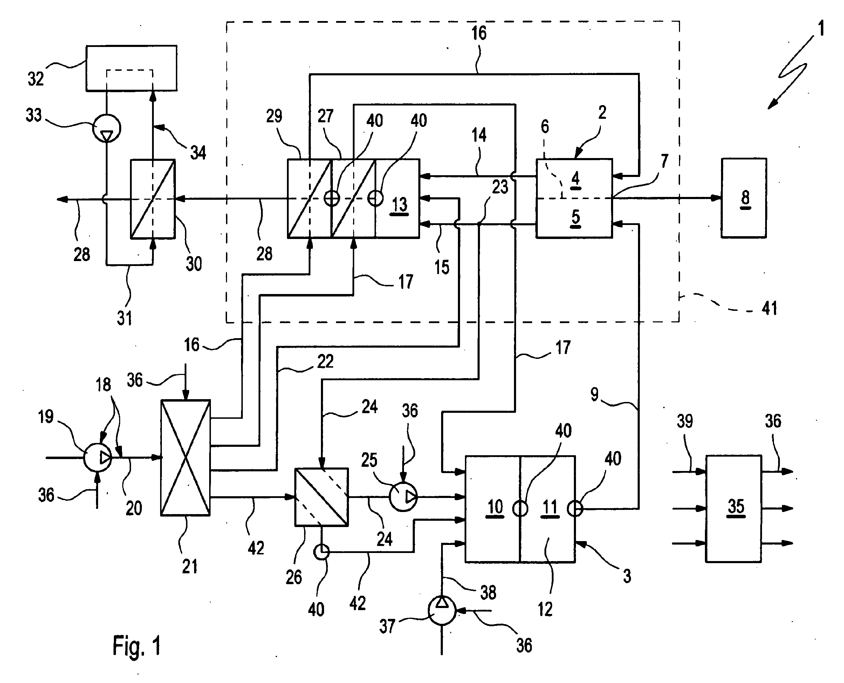

Die einzige Fig. 1 zeigt eine stark vereinfachte, schaltplanartige Prinzipdarstellung eines Brennstoffzellensystems.

Entsprechend Fig. 1 umfasst ein Brennstoffzellensystem 1, das vorzugsweise in einem Kraftfahrzeug angeordnet sein kann, zumindest eine Brennstoffzelle 2 sowie zumindest einen Reformer 3. Die Brennstoffzelle 2 dient zum Generieren von elektrischem Strom aus einem Wasserstoffgas enthaltenden Anodengas und einem Sauerstoff enthaltenden Kathodengas. Dementsprechend weist die Brennstoffzelle 2 eine Kathodenseite 4 und eine Anodenseite 5 auf, die durch einen Elektrolyten 6 voneinander getrennt sind. Beim Elektrolyten 6 kann es sich um ein Keramikbauteil und/oder um eine Membran handeln. Die Brennstoffzelle 2 kann als Hochtemperatur-Brennstoffzelle, insbesondere als SOFC-Brennstoffzelle ausgestaltet sein. Ebenso kann die Brennstoffzelle 2 als Niedertemperatur-Brennstoffzelle ausgestaltet sein, z.B. als PEM-Brennstoffzelle, die mit einer Protonen-Transport-Membran bzw. mit einer Polymer-Elektrolyt-Membran arbeitet. Dabei kann dann dem Reformer 3 eine hier nicht gezeigte CO-Gasreinigungsstufe nachgeschaltet sein. Über zumindest einen elektrischen Anschluss 7 ist bei aktivierter Brennstoffzelle 2 an dieser elektrischer Strom abgreifbar, um einen grundsätzlich beliebigen Verbraucher 8 mit elektrischer Energie zu versorgen. Der Verbraucher 8 kann in einem Fahrzeug durch einen oder mehrere beliebige elektrische Verbraucher des Fahrzeuges gebildet sein; ebenso kann es sich dabei um das gesamt elektrische Bordnetz des Fahrzeugs handeln.

Der Reformer 3 dient zum Generieren eines Wasserstoffgas enthaltenden Brenngases aus einem Wasserstoff enthaltenden Kraftstoff und einem Sauerstoff enthaltenden Oxidator. Das Brenngas wird innerhalb des Brennstoffzellensystems 1 als Anodengas zur Versorgung der Brennstoffzelle 2 verwendet. Dementsprechend verbindet eine Anodengasleitung 9 einen Ausgang des Reformers 3 mit einem Eingang der Anodenseite 5 der Brennstoffzelle 2. Der Reformer 3 enthält beispielsweise einen Gemischbildungsabschnitt 10 sowie einen diesem nachgeordneten Brenngasbildungsabschnitt 11. Im normalen Reformerbetriebszustand des Reformers 3 erfolgt im Gemischbildungsabschnitt 10 eine Gemischbildung, beispielsweise in Verbindung mit einer vollständigen oder teilweisen Verbrennungsreaktion, die insbesondere mit kalter Verbrennung bzw. kalter Flamme arbeitet. Beispielsweise kann dadurch ein flüssiger Kraftstoff zur Gemischbildung herangezogen werden. Vorzugsweise handelt es sich beim Kraftstoff um den gleichen Kraftstoff, mit dem auch eine Brennkraftmaschine des mit dem Brennstoffzellensystem 1 ausgestatteten Fahrzeugs versorgt wird. Als Kraftstoff eignet sich beispielsweise Benzin, Diesel, Biodiesel; ebenso sind gasförmige Kraftstoffe wie Erdgas denkbar.

Im Brenngasbildungsabschnitt 11 erfolgt die eigentliche Generierung des Brenngases durch eine entsprechende Reaktion des zugeführten Gemischs. Beispielsweise enthält der Brenngasbildungsabschnitt 11 hierzu einen Katalysator 12, der bei einem entsprechenden Oxidator/Kraftstoff-Verhältnis eine partielle Oxidation des Kraftstoffs ermöglicht, wodurch sich insbesondere Wasserstoffgas und Kohlenmonoxid bildet. Als Oxidator wird hier vorzugsweise Luft verwendet.

Ferner umfasst das hier gezeigte Brennstoffzellensystem 1 einen Restgasbrenner 13, der eine Verbrennung von Wasserstoffgas enthaltenden Anodenabgas und Sauerstoffgas enthaltenden Kathodenabgas ermöglicht. Die Umsetzung des Wasserstoffs des Anodengases mit dem Sauerstoff des Kathodengases erfolgt bei aktivierter Brennstoffzelle 2 innerhalb der Brennstoffzelle 2 in Abhängigkeit des Strombedarfs. Auch bei maximaler elektrischer Leistung der Brennstoffzelle 2 können dabei Reste an Sauerstoff bzw. Reste an Wasserstoff in den Abgasen der Brennstoffzelle 2 enthalten sein. Die Verbrennung der Brennstoffzellenabgase im Restgasbrenner 3 verbessert die Emissionswerte des Brennstoffzellensystems 1 und ermöglicht es, die in den Brennstoffzellenabgasen enthaltene, chemisch gebundene Wärme freizusetzen und zur Steigerung des Wirkungsgrads des Brennstoffzellensystems 1 zu nutzen. Zweckmäßig ist der Restgasbrenner 13 über eine Kathodenabgasleitung 14 an die Kathodenseite 4 und über eine Anodenabgasleitung 15 an die Anodenseite 5 angeschlossen. Zur Versorgung der Brennstoffzelle 2 mit dem Kathodengas, bei dem es sich vorzugsweise um Luft handelt, ist eine Kathodengasleitung 16 an einen Eingang der Kathodenseite 4 angeschlossen.

Zur Versorgung des Reformers 3 mit dem Oxidator ist eine Oxidatorleitung 17 an einen Eingang des Reformers 3 angeschlossen. Da vorzugsweise sowohl das Kathodengas als auch der Oxidator durch Luft gebildet sind, kann eine gemeinsame Oxidatorversorgung 18 vorgesehen sein, die eine Fördereinrichtung 19, insbesondere eine Pumpe, ein Kompressor oder ein Gebläse, sowie eine Versorgungsleitung 20 aufweist. Die Versorgungsleitung 20 zweigt sich bei 21 in die Kathodengasleitung 16 und die Oxidatorleitung 17 auf. Bei der hier gezeigten, besonders bevorzugten Ausführungsform zweigt sich die Versorgungsleitung 20 bei 21 außerdem in eine Kühlgasleitung 22 auf, die an einen Eingang, insbesondere kathodenseitig, des Restgasbrenners 13 angeschlossen ist. Hierdurch kann der Restgasbrenner 13 bei Bedarf mit einem Kühlgas, bei dem es sich vorzugsweise um Luft handelt, versorgt werden. Ferner ist hier eine zweite Oxdatorleitung 42 vorgesehen, über die der Reformer 3 zusätzlich oder alternativ zur anderen, ersten Oxidatorleitung 17 mit Oxidator versorgt werden kann. Es ist klar, dass bei einer gemeinsamen Oxidatorversorgung 18 entsprechende Ventilmittel vorgesehen sein können, um die einzelnen Oxidatorströme, also insbesondere das Kathodengas, den Oxidator und das Kühlgas, hinsichtlich ihrer mengenmäßigen Aufteilung zu steuern. Bevorzugt ist hierzu die Aufzweigstelle 21 als Ventileinrichtung ausgestaltet, die im Folgenden auch mit 21 bezeichnet wird. Diese Ventileinrichtung 21 kann z.B. so ausgestaltet sein, dass sie ein stufenloses Umschalten oder Aufteilen der Volumenströme zwischen den einzelnen Zweigen 16, 17, 22 und 42 ermöglicht.

Alternativ sind auch zwei separate Oxidatorversorgungen 18 denkbar, von denen die eine den Reformer 3 und die andere die Brennstoffzelle 2 und den Restgasbrenner 13 mit Oxidatorgas bzw. Kühlgas versorgt.

Von der Anodenabgasleitung 15 zweigt bei 23 eine Rezirkulationsleitung 24 ab, die an einen Eingang des Reformers 3 angeschlossen ist und eine Fördereinrichtung 25, z.B. ein Gebläse, eine Pumpe oder einen Kompressor, enthält. Über die Rezirkulationsleitung 24 kann ein Teil des Anodenabgases erneut dem Reformer 3 zugeführt werden. Dies ist insbesondere für Betriebszustände vorteilhaft, bei denen in der Brennstoffzelle 2, insbesondere aufgrund eines reduzierten Strombedarfs, nur eine reduzierte Menge an Wasserstoffgas im Anodengas umgesetzt wird.

Erfindungsgemäß ist ein Rezirkulations-Wärmeübertrager 26 vorgesehen, der einerseits in die Rezirkulationsleitung 24 und andererseits in die zweite Oxidatorleitung 42 eingebunden sein kann. Hierdurch ist es möglich, den Oxidator vorzuwärmen bzw. das rückgeführte Anodenabgas zu kühlen. Der Rezirkulations-Wärmeübertrager 26 ist dabei in der Rezirkulationsleitung 24 stromauf der Fördereinrichtung 25 angeordnet. Anstelle einer Einbindung in die zweite Oxidatorleitung 42 kann auch eine Einbindung in die Kathodengasleitung 16 oder in die erste Oxidatorleitung 17 oder in eine beliebige andere Leitung, wie z.B. in die Versorgungsleitung 20 oder in die Kühlgasleitung 22, vorgesehen sein.

Das erfindungsgemäße Brennstoffzellensystem 1 weist außerdem einen Reformer-Wärmeübertrager 27 auf, der einerseits in die erste Oxidatorleitung 17 und andererseits in eine Abgasleitung 28 eingebunden ist, die im Restgasbrenner 13 entstehendes Brennerabgas vom Restgasbrenner 13 abführt. Dementsprechend ermöglicht der Reformer-Wärmeübertrager 27 eine Übertragung von im Brennerabgas enthaltener Wärme auf den dem Reformer 3 zuzuführenden Oxidator. Bei der hier gezeigten Ausführungsform ist der Reformer-Wärmeübertrager 27 baulich in eine Ausgangsseite des Restgaswärmeübertragers 13 integriert. Grundsätzlich ist jedoch auch eine separate Bauweise mit einer beabstandeten Anordnung denkbar.

Beim beispielhaften Aufbau umfasst der Reformer 3 somit eine erste Oxidatorleitung 17, die über den Reformer-Wärmeübertrager 27 führt, und eine zweite Oxidatorleitung 42, die über den Rezirkulations-Wärmeübertrager 26 führt, die - je nach Betriebszustand - alternativ oder kumulativ aktiv sein können.

Ferner ist die hier gezeigte Ausführungsform des Brennstoffzellensystems 1 mit einem Brennstoffzellen-Wärmeübertrager 29 ausgestattet, der einerseits in die Kathodengasleitung 16 und andererseits in die Abgasleitung 28 eingebunden ist. Hierdurch kann Wärme aus dem Brennerabgas auf das Kathodengas übertragen werden, um dieses vorzuwärmen. Bei der hier gezeigten, bevorzugten Ausführungsform ist der Brennstoffzellen-Wärmeübertrager 29 stromab des Reformer-Wärmeübertragers 27 in der Abgasleitung 28 angeordnet. Ferner ist hier der Brennstoffzellen-Wärmeübertrager 29 ausgangsseitig in den Reformer-Wärmeübertrager 27 baulich integriert. Grundsätzlich ist jedoch auch hier eine getrennte, separate Bauweise denkbar.

Ferner kann optional ein Heiz-Wärmeübertrager 30 vorgesehen sein, der einerseits in die Abgasleitung 28 und andererseits in eine Heizleitung 31 eingebunden sein kann und dadurch eine Übertragung von Wärme aus dem Brennerabgas in ein in der Heizleitung 31 geführtes Wärmeträgermedium ermöglicht. Die Heizleitung 31 kann zu einem bezüglich des Brennstoffzellensystems 1 externen Wärmenutzer oder Wärmeverbraucher 32 führen, kann insbesondere zu einem Heizkreis 34 gehören und vorzugsweise eine geeignete Fördereinrichtung 33, z.B. eine Pumpe, enthalten. Der Heizkreis 34 kann beispielsweise durch einen Zweig eines Kühlkreises einer Brennkraftmaschine gebildet sein, die zusammen mit dem Brennstoffzellensystem 1 in einem Fahrzeug angeordnet ist. Ebenso kann es sich beim Heizkreis 34 um einen Bestandteil einer Fahrzeug-Klimatisierungseinrichtung handeln, der entweder mit einem flüssigen oder mit einem gasförmigen Wärmeträgermedium arbeiten kann. Beim Wärmeverbraucher 32 handelt es sich beispielsweise um einen entsprechenden Wärmeübertrager oder eine andere beliebige Einrichtung, die über die Heizleitung 31 mit Wärme versorgt wird.

Das Brennstoffzellensystem 1 ist außerdem mit einer Steuerung 35 ausgestattet, die über entsprechende Steuerleitungen 36 das Brennstoffzellensystem 1 bzw. dessen Komponenten betätigt. Beispielsweise dient die Steuerung 35 zur Betätigung der Brennstoffzelle 2, des Reformers 3 sowie des Restgasbrenners 13. Außerdem kann die Steuerung 35 die Fördereinrichtung 19 der Oxidatorversorgung 18, die Fördereinrichtung 25 der Rezirkulationsleitung 24 sowie eine Fördereinrichtung 37, z.B. eine Pumpe, die in einer Kraftstoffleitung 38 zur Versorgung des Reformers 3 mit dem Kraftstoff angeordnet ist, betreiben. Auch kann die Steuerung 35 zur Betätigung der Ventileinrichtung 21 vorgesehen sein. Ferner kann die Steuerung 35 über Signalleitungen 39 mit einer Sensorik verbunden sein, wobei diese Sensorik insbesondere mehrere Temperatursensoren 40 und/oder nicht gezeigte Drucksensoren umfassen kann, von denen einige hier exemplarisch durch Kreise angedeutet sind. Beispielsweise können derartige Temperatursensoren 40 im Reformer 3 am Einlass und am Auslass des Katalysators 12 angeordnet sein. Ein weiterer Temperatursensor 40 ist am Auslass des Restgasbrenners 13 denkbar. Ferner kann ein Temperatursensor 40 in der Abgasleitung 28 am Auslass des Reformer-Wärmeübertragers 27 vorgesehen sein. Außerdem ist hier zur Realisierung einer bevorzugten Ausführungsform ein Temperatursensor 40 in der zweiten Oxidatorleitung 42 angeordnet. Die Anzahl und Anordnung der gezeigten Temperatursensoren 40 ist rein exemplarisch.

Bei der hier gezeigten Ausführungsform bilden der Restgasbrenner 13 und die Brennstoffzelle 2 separate und voneinander beabstandete Bauteile. Bevorzugt ist jedoch eine Ausführungsform, bei welcher der Restgasbrenner 13 in eine Ausgangsseite der Brennstoffzelle 2 baulich integriert ist.

Das Brennstoffzellensystem 1 kann außerdem eine thermisch isolierende Isolationsbox 41 aufweisen, die hier durch einen mit unterbrochener Linie gezeichneten Rahmen angedeutet ist. Die Isolationsbox 41 kann aus einem einzelnen Körper oder aus mehreren separaten Körpern bestehen. Innerhalb der Isolationsbox 41 sind die im Betrieb des Brennstoffzellensystems 1 vergleichsweise heiß werdenden Komponenten angeordnet, während außerhalb kühlere Bereiche vorliegen, in denen bevorzugt hitzeempfindliche Komponenten angeordnet werden können.

Das erfindungsgemäße Brennstoffzellensystem 1 arbeitet insbesondere wie folgt:

Bei einem Kaltstart des Brennstoffzellensystems 1, also bei einem Start des Brennstoffzellensystems 1 in einem Zustand, bei dem die einzelnen Komponenten des Brennstoffzellensystems 1 im Vergleich zu ihrer üblichen Betriebstemperatur relativ kalt sind und insbesondere Umgebungstemperatur aufweisen können, wird eine spezielle Startprozedur realisiert, die es ermöglicht, das Brennstoffzellensystem 1 in relativ kurzer Zeit bei vergleichsweise niedrigen Werten für Kraftstoffverbrauch und Schadstoffemissionen zur Abgabe von Strom betriebsbereit zu machen. Unterhalb einer Brennstoffzellenstarttemperatur ist die Brennstoffzelle 2 deaktiviert, d.h., die Steuerung 35 lässt einen Abgriff von Strom an der Brennstoffzelle 2 nicht zu. Bei deaktivierter Brennstoffzelle 2 erfolgt innerhalb der Brennstoffzelle 2 keine Umsetzung von anodenseitigem Wasserstoff und kathodenseitigem Sauerstoff sowie ggf. von Kohlenmonoxid. Anodengas und Kathodengas können ungehindert die Kathodenseite 4 bzw. die Anodenseite 5 der Brennstoffzelle 2 durchströmen. Für den Reformer 3 ist eine Reformerstarttemperatur festgelegt, die beispielsweise durch Versuchsreihen ermittelt worden ist. Sofern die Temperatur des Reformers 3 unterhalb der Reformerstarttemperatur liegt, wird der Reformer 3 für die genannte Startprozedur in einem Brennerbetriebszustand betrieben. D.h. der Reformer 3 wird als Brenner zum Verbrennen des Kraftstoffs mit dem Oxidator betrieben. Dies bedeutet insbesondere, dass die Steuerung 35 die Versorgung des Reformers 3 mit Kraftstoff und mit Oxidator so ansteuert, dass ein Sauerstoffüberschuss herrscht, so dass die Luftzahl λ > 1 ist. Bei dieser Verbrennungsreaktion kommt es zu einer starken Wärmeentwicklung im Reformer 3, wodurch sich dieser vergleichsweise rasch aufheizt. Die dabei entstehenden, vergleichsweise heißen Reformerabgase gelangen über die Anodenleitung 9 zur Brennstoffzelle 2 und bewirken dort eine Aufheizung der Brennstoffzelle 2. Sobald der Reformer 3 seine Reformerstarttemperatur erreicht, z.B. bei Erreichen der Katalysator-Aktivierungstemperatur, bewirkt die Steuerung 35 ein Umschalten vom Brennerbetriebszustand in einen Reformerbetriebszustand. In diesem Reformerbetriebszustand generiert der Reformer 3 das Brenngas. Insbesondere steuert die Steuerung 35 hierzu die Versorgung des Reformers 3 mit Kraftstoff, Rezyklat (rezirkuliertem Anoden(ab)gas) und Oxidator so, dass im Reformerbetriebszustand ein Kraftstoffüberschuss herrscht, also eine Luftzahl λ < 1. Auch der Reformerbetrieb ist exotherm, so dass sich der Reformer 3 weiter aufheizt. Das heiße Brenngas beaufschlagt die Brennstoffzelle 2, wodurch sich auch diese weiter aufheizen kann. Die Reformerstarttemperatur ist kleiner als die Brennstoffzellenstarttemperatur. Vorzugsweise ist die Reformerstarttemperatur auch kleiner als eine kritische Elektrolyttemperatur, die dann vorliegt, wenn eine Kontaktierung des Elektrolyten 6 mit Sauerstoff zu einer Beschädigung des Elektrolyten 6 führen würde. Diese kritische Elektrolyttemperatur kann dabei kleiner sein als oder gleich groß sein wie die Brennstoffzellenstarttemperatur. Unterhalb der Brennstoffzellenstarttemperatur verbleibt die Brennstoffzelle 2 im deaktivierten Zustand, auch wenn der Reformer 3 seine Reformerstarttemperatur übersteigt und dementsprechend im Reformerbetriebszustand betrieben wird. Das dabei gebildete Anodengas wird ungehindert und ohne Umsetzung - nur als geringer Wärmestrom - durch die Brennstoffzelle 2 durchgeleitet und gelangt so in den Restgasbrenner 13. Gleichzeitig strömt auch das Kathodengas ohne Umsetzung durch die Brennstoffzelle 2 hindurch und gelangt in den Restgasbrenner 13. Im Restgasbrenner 13 erfolgt eine Verbrennung des Anodengases bzw. Anodenabgases mit dem Kathodengas bzw. Kathodenabgas, was zu sehr heißen Brennerabgasen führt. Die Wärme wird dem Brennerabgas im Reformer-Wärmeübertrager 27 zum Aufheizen des Oxidators und im Brennstoffzellen-Wärmeübertrager 29 zum Aufheizen des Kathodengases zumindest teilweise entzogen. Durch den aufgeheizten Oxidator stabilisiert sich der Reformerprozess, also insbesondere die Verdampfung des Kraftstoffs und Gemischbildung mittels kalter Flamme sowie die partielle Oxidation. Gleichzeitig trägt der aufgeheizte Oxidator zur Temperaturerhöhung des Reformers 3 bei. Das aufgeheizte Kathodengas beschleunigt ebenfalls die Erwärmung der Brennstoffzelle 2. Sobald die Brennstoffzelle ihre Brennstoffzellenstarttemperatur erreicht, wird sie über die Steuerung 35 aktiviert, so dass daran Strom abgreifbar ist.

Der Reformer-Wärmeübertrager 27 wird erfindungsgemäß bevorzugt für den Startbetrieb des Brennstoffzellensystems 1 genutzt, um das dem Reformer 3 zuzuführende Oxidatorgas aufzuheizen, während im Normal- oder Nennbetrieb des Systems 1 bevorzugt der Rezirkulations-Wärmeübertrager 26 genutzt wird, um das rückgeführte Anodenabgas zu kühlen. Beispielsweise arbeitet die Steuerung 35 entsprechend einer Temperatur-Regelstrategie, wozu sie z.B. auf den in der zweiten Oxidatorleitung 42 angeordneten Temperatursensor 40 zugreift. Die Steuerung 35 betätigt dabei die Ventileinrichtung 21 zur Aufteilung des Oxidatorstroms unter anderem auf die beiden Oxidatorleitungen 17 und 42. Bei einem Kaltstart der Brennstoffzelle 2 erfolgt die Oxidatorversorgung des Reformers 3 überwiegend, jedoch in der Regel nicht ausschließlich über die erste Oxidatorleitung 17, also über den Reformer-Wärmeübertrager 17. Der Reformer 3 kann dabei mit Volllast bzw. unter Nennbetriebsbedingungen betrieben werden. Mit steigender Temperatur im Rezyklat, die mit der Brennstoffzellentemperatur korreliert, wird der Oxidatorstrom durch die erste Oxidatorleitung 17, vorzugsweise stufenlos, reduziert und gleichzeitig der Oxidatorstrom durch die zweite Oxidatorleitung 42 entsprechend erhöht. Bei Erreichen der Betriebstemperaturen in der Brennstoffzelle 2 erfolgt die Oxidatorversorgung des Reformers 3 überwiegend, jedoch in der Regel nicht ausschließlich über die zweite Oxidatorleitung 42, also über den Rezirkulations-Wärmeübertrager 26. Diese Aufteilung des Oxidatorstroms erfolgt auch bei einem Warmstart der Brennstoffzelle 2.

## Patentansprüche

1. Verfahren zum Starten eines Brennstoffzellensystems (1), insbesondere in einem Kraftfahrzeug,
- bei dem ein Reformer (3) zum Generieren von Wasserstoffgas enthaltenden Brenngas aus Wasserstoff enthaltenden Kraftstoff und Sauerstoff enthaltenden Oxidator unterhalb einer Reformerstarttemperatur in einem Brennerbetriebszustand zum Verbrennen des Kraftstoffs mit dem Oxidator betrieben wird,
- bei dem der Reformer (3) oberhalb der Reformerstarttemperatur in einem Reformerbetriebszustand zum Generieren des Brenngases betrieben wird,
**dadurch gekennzeichnet,**
**dass** der dem Reformer (3) zugeführte Oxidator in Abhängigkeit der Temperatur der Brennstoffzelle (2) durch Wärme des Brennerabgases und Wärme des rückgeführten anodenseitigen Gases der Brennstoffzelle (2) vorgewärmt wird, derart, dass mit zunehmender Brennstoffzellentemperatur der Anteil der dem Brennerabgas entnommenen Wärme abnimmt und der Anteil der dem rückgeführten anodenseitigen Gas entnommenen Wärme erhöht wird.

2. Verfahren nach Anspruch 1,
**dadurch gekennzeichnet,**
- **dass** eine Brennstoffzelle (2) zum Generieren von elektrischem Strom aus dem als Anodengas dienenden Brenngas und Sauerstoff enthaltenden Kathodengas unterhalb einer Brennstoffzellenstarttemperatur, die größer ist als die Reformerstarttemperatur, deaktiviert ist,
- **dass** ein Restgasbrenner (13) zum Verbrennen von im Betrieb der aktivierten Brennstoffzelle (2) anfallendem Wasserstoff enthaltenden Anodenabgas mit Sauerstoffgas enthaltenden Kathodenabgas auch oberhalb der Reformerstarttemperatur und unterhalb der Brennstoffzellenstarttemperatur zum Verbrennen des durch die Brennstoffzelle (2) durchgeleiteten Anodengases mit dem durch die Brennstoffzelle (2) durchgeleiteten Kathodengas betrieben wird.

3. Verfahren nach Anspruch 2,
**dadurch gekennzeichnet,**
**dass** der dem Reformer (3) zugeführte Oxidator durch vom Restgasbrenner (13) abgeführtes Brennerabgas vorgewärmt wird.

4. Verfahren nach Anspruch 2 oder 3,
**dadurch gekennzeichnet,**
**dass** das der Brennstoffzelle (2) zugeführte Kathodengas durch vom Restgasbrenner (13) abgeführtes Brennerabgas vorgewärmt wird, vorzugsweise nachdem das Brennerabgas den dem Reformer (3) zugeführten Oxidator vorgewärmt hat.

5. Verfahren nach einem der Ansprüche 2 bis 4,
**dadurch gekennzeichnet,**
**dass** die Brennstoffzelle (2) oberhalb der Brennstoffzellenstarttemperatur aktiviert und im Brennstoffzellenbetrieb zum Generieren von elektrischem Strom betrieben wird.

6. Brennstoffzellensystem, insbesondere in einem Kraftfahrzeug,
- mit zumindest einem Reformer (3) zum Generieren von Wasserstoffgas enthaltenden Brenngas aus Wasserstoff enthaltenden Kraftstoff und Sauerstoff enthaltenden Oxidator,
- mit zumindest einer Brennstoffzelle (2) zum Generieren von elektrischem Strom aus dem als Anodengas dienenden Brenngas und Sauerstoffgas enthaltenden Kathodengas,
- mit einer Steuerung (35) zum Betreiben des Reformers (3) und der Brennstoffzelle (2),
- wobei die Steuerung (35) so ausgestaltet ist, dass sie beim Starten des Brennstoffzellensystems (1) den Reformer (3) unterhalb einer Reformerstarttemperatur in einem Brennerbetriebszustand zum Verbrennen des Kraftstoffs mit dem Oxidator betreibt und oberhalb der Reformerstartemperatur in einem Reformerbetriebszustand zum Generieren des Brenngases betreibt,
**dadurch gekennzeichnet,**
**dass** eine mit der Steuerung (35) betätigbare Ventileinrichtung (21) vorgesehen ist, die den dem Reformer (3) zuzuführenden Oxidator in Abhängigkeit ihrer Betätigung über einen mit Brennerabgas wärmeübertragend gekoppelten Reformer-Wärmeübertrager (27) und/oder über einen mit zum Reformer (3) rückgeführtem, anodenseitigem Gas wärmeübertragend gekoppelten Rezirkulations-Wärmeübertrager (26) leitet, wobei die Steuerung (35) zu einer von der Temperatur der Brennstoffzelle (2) abhängigen Betätigung der Ventileinrichtung (21) ausgestaltet ist, derart, dass die Ventileinrichtung (21) mit zunehmender Brennstoffzellentemperatur den Anteil des über den Reformer-Wärmeübertrager (27) geführten Oxidatorstroms reduziert und den Anteil des über den Rezirkulations-Wärmeübertrager geführten Oxidatorstroms erhöht.

7. Brennstoffzellensystem nach Anspruch 6,
**dadurch gekennzeichnet,**
**dass** ein Restgasbrenner (13) zum Verbrennen von im Betrieb der Brennstoffzelle (2) anfallenden Wasserstoffgas enthaltenden Anodenabgas mit Sauerstoffgas enthaltenden Kathodenabgas vorgesehen ist.

8. Brennstoffzellensystem nach Anspruch 7,
**dadurch gekennzeichnet,**
**dass** die Steuerung (35) zum Betreiben des Restgasbrenners (13) ausgestaltet ist.

9. Brennstoffzellensystem nach Anspruch 7 oder 8,
**dadurch gekennzeichnet,**
**dass** die Steuerung (35) so ausgestaltet ist, dass sie die Brennstoffzelle (2) unterhalb einer Brennstoffzellenstarttemperatur, die größer ist als die Reformerstarttemperatur, deaktiviert und den Restgasbrenner (13) auch unterhalb der Brennstoffzellenstartemperatur und oberhalb der Reformerstarttemperatur zum Verbrennen des durch die Brennstoffzelle (2) durchgeleiteten Anodengases mit dem durch die Brennstoffzelle (2) durchgeleiteten Kathodengas betreibt.

10. Brennstoffzellensystem nach einem der Ansprüche 7 bis 9,
**dadurch gekennzeichnet,**
**dass** ein Reformer-Wärmeübertrager (27) vorgesehen ist, der einerseits in eine Brennerabgas vom Restgasbrenner (13) abführende Abgasleitung (28) und andererseits in eine den Oxidator dem Reformer (3) zuführende Oxidatorleitung (17) eingebunden ist.

11. Brennstoffzellensystem nach einem der Ansprüche 7 bis 10,
**dadurch gekennzeichnet,**
**dass** ein Brennstoffzellen-Wärmeübertrager (29) vorgesehen ist, der einerseits in eine Brennerabgas vom Restgasbrenner (13) abführende Abgasleitung (28) und andererseits in eine das Kathodengas der Brennstoffzelle (2) zuführende Kathodengasleitung (16) eingebunden ist.

12. Brennstoffzellensystem nach einem der Ansprüche 7 bis 11,
**dadurch gekennzeichnet,**
**dass** ein Heiz-Wärmeübertrager (30) vorgesehen ist, der einerseits in eine Brennerabgas vom Restgasbrenner (13) abführende Abgasleitung (28) und andererseits in eine ein Wärmeträgermedium zu einem bezüglich des Brennstoffzellensystems (1) externen Wärmeverbraucher (32) führende Heizleitung (31) eingebunden ist.

13. Brennstoffzellensystem zumindest nach den Ansprüchen 7 und 10,
**dadurch gekennzeichnet,**
**dass** der Reformer-Wärmeübertrager (27) baulich in den Restgasbrenner (13) integriert ist.

14. Brennstoffzellensystem zumindest nach den Ansprüchen 10 und 11,
**dadurch gekennzeichnet,**
**dass** der Brennstoffzellen-Wärmeübertrager (29) baulich in den Reformer-Wärmeübertrager (27) integriert ist und/oder stromab des Reformer-Wärmeübertragers (27) in der Abgasleitung (28) angeordnet ist.

15. Brennstoffzellensystem zumindest nach Anspruch 7,
**dadurch gekennzeichnet,**
**dass** der Restgasbrenner (13) baulich in die Brennstoffzelle (2) integriert ist.

16. Brennstoffzellensystem zumindest nach den Ansprüchen 11 und 12,
**dadurch gekennzeichnet,**
**dass** der Heiz-Wärmeübertrager (30) stromab des Brennstoffzellen-Wärmeübertragers (29) in der Abgasleitung (28) angeordnet ist.

## Claims

1. A method for the starting of a fuel cell system (1), more preferably in a motor vehicle,
- wherein a reformer (3) for generating fuel gas containing hydrogen gas from oxidant containing fuel and oxygen containing hydrogen below a reformer starting temperature in a burner operating state is operated for combusting the fuel with the oxidant,
- wherein the reformer (3) above the reformer starting temperature in a reformer operating state is operated for generating the fuel gas, **characterized in that** the oxidant fed to the reformer (3) is preheated as a function of the temperature of the fuel cell (2) through heat of the burner waste gas and heat of the returned anode-sided gas of the fuel cell (2) in such a manner that with increasing fuel cell temperature the component of the heat removed from the burner waste gas decreases and the component of the heat removed from the returned anode-sided gas is increased.

2. The method according to Claim 1, **characterized**
- **in that** a fuel cell (2) for generating electric current from the fuel gas serving as anode gas and cathode gas containing oxygen is deactivated below a fuel cell starting temperature which is greater than the reformer starting temperature,
- **in that** a residual gas burner (13) for combusting anode waste gas containing hydrogen obtained during the operation of the activated fuel cell (2) with cathode waste gas containing oxygen gas is also operated above the reformer starting temperature and below the fuel cell starting temperature for combusting the anode gas passed through the fuel cell (2) with the cathode gas passed through the fuel cell (2).

3. The method according to Claim 2, **characterized in that** the oxidant fed to the reformer (3) is preheated by burner waste gas drawn off from the residual gas burner (13).

4. The method according to Claim 2 or 3, **characterized in that** the cathode gas fed to the fuel cell (2) is preheated through burner waste gas drawn off from the residual gas burner (13), preferentially after the burner waste gas has preheated the oxidant fed to the reformer (3).

5. The method according to any one of the Claims 2 to 4, **characterized in that** the fuel cell (2) above the fuel cell starting temperature is activated and in fuel cell operation is operated for generating electric current.

6. A fuel cell system more preferably in a motor vehicle,
- with at least one reformer (3) for generating fuel gas containing hydrogen gas from oxidant containing fuel and oxygen containing hydrogen,
- with at least one fuel cell (2) for generating electric current from fuel gas serving as anode gas and cathode gas containing oxygen gas,
- with a control (35) for operating the reformer (3) and the fuel cell (2),
- wherein the control (35) is embodied so that on starting of the fuel cell system (1) it operates the reformer (3) below a reformer starting temperature in a burner operating state for combusting the fuel with the oxidant and above the reformer starting temperature it operates the reformer in a reformer operating state for generating the fuel gas,
**characterized in that** a valve device (21) actuatable with the control (35) is provided which directs the oxidant to be fed to the reformer (3) as a function of its actuation via a reformer heat transfer unit (27) coupled with fuel waste gas in a heat transferring manner and/or via a recirculation heat transfer unit (26) coupled with an anode-sided gas returned to the reformer (3) in a heat-transferring manner, wherein the control (35) for actuation of the valve device (21) dependent on the temperature of the fuel cell (2) is embodied in such a manner that the valve device (21) with increasing fuel cell temperature reduces the component of the oxidant flow directed via the reformer heat transfer unit (27) and increases the component of the oxidant flow directed via the recirculation heat transfer unit.

7. The fuel cell system according to Claim 6, **characterized in that** a residual gas burner (13) for combusting hydrogen gas containing anode waste gas obtained in operation of the fuel cell (2) with cathode waste gas containing oxygen gas is provided.

8. The fuel cell system according to Claim 7, **characterized in that** the control (35) is embodied for operating the residual gas burner (13).

9. The fuel cell system according to Claim 7 or 8, **characterized in that** the control (35) is embodied so that it deactivates the fuel cell (2) below a fuel cell starting temperature which is greater than the reformer starting temperature and operates the residual gas burner (13) even below the fuel cell starting temperature and above the reformer starting temperature for combusting the anode gas passed through the fuel cell (2) with the cathode gas passed through the fuel cell (2).

10. The fuel cell system according to any one of the Claims 7 to 9, **characterized in that** a reformer heat transfer unit (27) is provided which on the one hand is incorporated in a waste gas line (28) drawing off burner waste gas from the residual gas burner (13) and on the other hand in an oxidant line (17) feeding the oxidant to the reformer (3).

11. The fuel cell system according to any one of the Claims 7 to 10, **characterized in that** a fuel cell heat transfer unit (29) is provided, which on the one hand is incorporated in an exhaust gas line (28) drawing off burner waste gas from the residual gas burner (13) and on the other hand in a cathode gas line (16) feeding the cathode gas to the fuel cell (2).

12. The fuel cell system according to any one of the Claims 7 to 11, **characterized in that** a heating heat transfer unit (30) is provided which on the one hand is incorporated in an exhaust gas line (28) drawing off burner waste gas from the residual gas burner (13) and on the other hand in a heating line (31) directing a heat transfer medium to a heat consumer (32) which is external with respect to the fuel cell system (1).

13. The fuel cell system according to at least Claims 7 and 10, **characterized in that** the reformer heat transfer unit (27) is constructionally integrated in the residual gas burner (13).

14. The fuel cell system according to at least Claims 10 and 11, **characterized in that** the fuel cell heat transfer unit (29) is constructionally integrated in the reformer heat transfer unit (27) and/or arranged in the exhaust gas line (28) upstream of the reformer heat transfer unit (27).

15. The fuel cell system according to at least Claim 7, **characterized in that** the residual gas burner (13) is constructionally integrated in the fuel cell (2).

16. The fuel cell system according to at least Claims 11 and 12, **characterized in that** the heating heat transfer unit (30) is arranged in the exhaust gas line (28) downstream of the fuel cell heat transfer unit (29).

## Revendications

1. Procédé pour démarrer un système de cellule de combustible (1), en particulier sur un véhicule automobile,
- sur lequel un reformeur (3) est utilisé pour générer du gaz combustible contenant de l'hydrogène à partir de carburant contenant de l'hydrogène et d'oxydant contenant de l'oxygène au-dessous d'une température de démarrage de reformeur dans un état de service de brûleur pour la combustion du carburant avec l'oxydant,
- sur lequel le reformeur (3) est utilisé au-dessus de la température de démarrage de reformeur dans un état de service de reformeur pour générer le gaz de combustion,
**caractérisé en ce que** l'oxydant amené au reformeur (3) est préchauffé en fonction de la température de la cellule de combustible (2) par la chaleur du gaz brûlé du brûleur et par la chaleur du gaz côté anode recyclé de la cellule de combustible (2) de telle sorte que la fraction de la chaleur prélevée sur le gaz brûlé du brûleur décroît avec l'augmentation de la température de la cellule de combustible et la fraction de la quantité prélevée sur le gaz côté anode recyclé est augmentée.

2. Procédé selon la revendication 1,
**caractérisé en ce que**
- une cellule de combustible (2) est désactivée pour générer du courant électrique à partir de gaz combustible servant de gaz d'anode et de gaz de cathode contenant de l'oxygène au-dessous d'une température de démarrage de cellule de combustible, qui est supérieure à la température de démarrage du reformeur,
- **en ce qu'**un brûleur de gaz résiduel (13) est utilisé pour la combustion de gaz brûlé d'anode contenant de l'hydrogène occasionné lors du fonctionnement de la cellule de combustible (2) activée avec du gaz brûlé de cathode contenant du gaz d'oxygène également au-dessus de la température de démarrage du reformeur et au-dessous de la température de démarrage de la cellule de combustible pour la combustion du gaz d'anode guidé à travers par la cellule de combustible (2) avec le gaz de cathode guidé à travers par la cellule de combustible (2).

3. Procédé selon la revendication 2,
**caractérisé en ce que**
l'oxydant amené au reformeur (3) est préchauffé par du gaz brûlé de brûleur évacué du brûleur de gaz résiduel (13).

4. Procédé selon la revendication 2 ou 3,
**caractérisé en ce que**
le gaz de cathode amené à la cellule de combustible (2) est préchauffé par le gaz brûlé de brûleur évacué du brûleur de gaz résiduel (13), de préférence une fois que le gaz brûlé de brûleur a préchauffé l'oxydant amené au reformeur (3).

5. Procédé selon l'une quelconque des revendications 2 à 4,
**caractérisé en ce que**
la cellule de combustible (2) est activée au-dessus de la température de démarrage de cellule de combustible et est exploitée pendant le fonctionnement de la cellule de combustible pour générer du courant électrique.

6. Système de cellule de combustible, en particulier sur un véhicule automobile,
- comprenant au moins un reformeur (3) pour générer du gaz combustible contenant du gaz d'hydrogène à partir de carburant contenant de l'hydrogène et d'oxydant contenant de l'oxygène,
- au moins une cellule de combustible (2) pour générer du courant électrique à partir du gaz combustible servant de gaz d'anode et du gaz de cathode contenant du gaz d'oxygène,
- une commande (35) pour le fonctionnement du reformeur (3) et de la cellule de combustible (2),
- la commande (35) étant conçue de telle sorte qu'elle exploite le reformeur (3) lors du démarrage du système de cellule de combustible (1) au-dessous d'une température de démarrage de reformeur dans un état de service de brûleur pour la combustion du carburant avec l'oxydant et l'exploite au-dessus de la température de démarrage de reformeur dans un état de service de reformeur pour générer le gaz combustible,
**caractérisé en ce que**
il est prévu un dispositif de soupape (21) pouvant être actionné avec la commande (35), qui guide l'oxydant à amener au reformeur (3) en fonction de son actionnement au moyen d'un échangeur de chaleur à reformeur (27) couplé par transmission de chaleur avec du gaz brûlé de brûleur et/ou au moyen d'un échangeur de chaleur à recirculation couplé (26) par transmission de chaleur avec du gaz côté anode recyclé pour le reformeur (3), la commande (35) étant conçue pour un actionnement, dépendant de la température de la cellule de combustible (2), du dispositif de soupape (21), de telle sorte que le dispositif de soupape (21) réduit avec l'augmentation de la température de la cellule de combustible la fraction du flux d'oxydant guidé par l'échangeur de chaleur à reformeur (27) et augmente la fraction du flux d'oxydant guidé par l'échangeur de chaleur à recirculation.

7. Système de cellule de combustible selon la revendication 6,
**caractérisé en ce que**
il est prévu un brûleur de gaz résiduel (13) pour la combustion de gaz brûlé d'anode contenant du gaz d'hydrogène occasionné lors du fonctionnement de la cellule de combustible (2) avec du gaz brûlé de cathode contenant du gaz d'oxygène.

8. Système de cellule de combustible selon la revendication 7,
**caractérisé en ce que**
la commande (35) est conçue pour le fonctionnement du brûleur de gaz résiduel (13).

9. Système de cellule de combustible selon la revendication 7 ou 8,
**caractérisé en ce que**
la commande (35) est conçue de telle sorte qu'elle désactive la cellule de combustible (2) au-dessous d'une température de démarrage de cellule de combustible qui est supérieure à la température de démarrage du reformeur et exploite le brûleur de gaz résiduel (13) également au-dessous de la température de démarrage de cellule de combustible et au-dessus de la température de démarrage de reformeur pour la combustion du gaz d'anode guidé à travers la cellule de combustible (2) avec le gaz de cathode guidé à travers la cellule de combustible (2).

10. Système de cellule de combustible selon l'une quelconque des revendications 7 à 9,
**caractérisé en ce que**
il est prévu un échangeur de chaleur à reformeur (27) qui est intégré d'une part dans une conduite de gaz brûlé (28) évacuant du gaz brûlé de brûleur du brûleur de gaz résiduel (13) et d'autre part dans une conduite d'oxydant (17) amenant l'oxydant au reformeur (3).

11. Système de cellule de combustible selon l'une quelconque des revendications 7 à 10,
**caractérisé en ce que**
il est prévu un échangeur de chaleur à cellule de combustible (29) qui est intégré d'une part dans la conduite de gaz brûlé (28) évacuant du gaz brûlé de brûleur du brûleur de gaz résiduel (13) et d'autre part dans une conduite de gaz de cathode (16) amenant le gaz de cathode à la cellule de combustible (2).

12. Système de cellule de combustible selon l'une quelconque des revendications 7 à 11,
**caractérisé en ce que**
il est prévu un échangeur de chaleur de chauffage (30) qui est intégré d'une part dans une conduite de gaz brûlé (28) évacuant du gaz brûlé de brûleur du brûleur de gaz résiduel (13) et d'autre part dans une conduite de chauffage (31) amenant un agent caloporteur à un consommateur de chaleur (32) externe par rapport au système de cellule de combustible (1).

13. Système de cellule de combustible selon les revendications 7 et 10,
**caractérisé en ce que**
l'échangeur de chaleur à reformeur (27) est intégré au niveau de la construction dans le brûleur de gaz résiduel (13).

14. Système de cellule de combustible au moins selon les revendications 10 et 11,
**caractérisé en ce que**
l'échangeur de chaleur à cellule de combustible (29) est intégré au niveau de la construction dans l'échangeur de chaleur à reformeur (27) et/ou est disposé en aval de l'échangeur de chaleur à reformeur (27) dans la conduite de gaz brûlé (28).

15. Système de cellule de combustible au moins selon la revendication 7,
**caractérisé en ce que**
le brûleur de gaz résiduel (13) est intégré au niveau de la construction dans la cellule de combustible (2).

16. Système de cellule de combustible au moins selon les revendications 11 et 12,
**caractérisé en ce que**
l'échangeur de chaleur de chauffage (30) est disposé en aval de l'échangeur de chaleur à cellule de combustible (29) dans la conduite de gaz brûlé (28).
